# EUROPEAN PATENT SPECIFICATION

(11) **EP 1 426 657 B1**
(45) Date of publication and mention of the grant of the patent: **13.02.2008**
(21) Application number: 03257424.6
(22) Date of filing: 25.11.2003
(51) Int. Cl.: F16H 7/08

(54) **A hydraulic tensioner**
Hydraulische Spanneinrichtung
Tendeur hydraulique

(30) Priority: 06.12.2002 GB 0228485
(43) Date of publication of application: 09.06.2004
(73) Proprietor: Schaeffler Chain Drive Systems SAS, 75008 Paris (FR)
(72) Inventor: Charton, Alexandre, 62000 Arras (FR); Demazeux, Francis, 62137 Coulogne (FR)
(74) Representative: Every, David Aidan

(56) References cited:
- EP-A- 0 097 065
- EP-A- 0 916 869
- GB-A- 2 374 649
- US-A- 4 362 525

## Description

The present invention relates to a hydraulic tensioner for an endless loop flexible power transmission element such as a chain or belt and more particularly, but not exclusively, to such a tensioner for imparting tension to a chain or belt used in a timing drive of an internal combustion engine of a vehicle.

Internal combustion engines of motor vehicles often include a timing belt or chain drive that passes over sprockets on the crankshaft and camshaft and is used to ensure that the camshaft is driven synchronously with the crankshaft. The tension in such a chain or belt varies considerably as a result of the expansion and contraction of engine components with temperature, torsional vibrations imparted from the crankshaft and camshaft, the engine speed and chain elongation as a result of chain wear or temperature variations in chain components. It is important to impart and maintain tension in the chain or belt so as to reduce noise and the likelihood of the chain or belt jumping from the teeth of the sprockets.

Tensioners for chains or belts generally comprise a housing with an openended cylindrical bore in which a plunger is slidably movable in a longitudinal direction and is biased outwardly of the bore by a coil spring so as to impart tension to the chain or belt. A variable volume fluid pressure chamber is defined between a hollow in the plunger and the walls of the bore. A check valve permits hydraulic fluid to pass from a source such as an oil pump into the pressure chamber but prevents passage of fluid in the reverse direction. The fluid in the pressurised chamber also serves to bias the plunger out of the cylinder towards the chain or belt.

The combined effect of the hydraulic fluid pressure and the coil spring biasing forces moves the plunger out of the housing and into contact with the chain or belt so as to take up the slack. An opposite resisting force is imparted from the chain to the plunger as a result of the tension induced in the chain by the drive. If the chain or belt is subjected to an increase in tension the resulting force applied to the plunger attempts to move it into the cylinder. However, such movement is prevented by the check valve which prevents the escape of hydraulic fluid out of the chamber. The incompressible nature of the hydraulic fluid prevents instant return movement of the plunger although a small annular clearance between the plunger and the cylinder wall may permit some fluid escape and limited slow retraction of the plunger.

When the internal combustion engine is idling or at rest there is little or no hydraulic fluid pressure and with insufficient fluid pressure in the chamber it is easier for the plunger to retract into the cylinder. This is particularly a problem when the engine has been idling for some time (and is therefore hot) or when the engine is started up as the lack of tension in the chain results in vibrations and noises being transmitted from the chain to the engine. In order to address this problem it is common to provide a locking ratchet mechanism to prevent excessive retraction of the plunger even when the fluid pressure is low.

The body or housing of tensioners of the kind described above were traditionally machined or cast from steel. In more recent times they have been produced by injection moulding plastics or aluminium and then machining. The housing designs require many machining operations to form fixing apertures, oil passages, oil reservoirs, planar surfaces etc. EP-916 863-A2 discloses a tensioner having the features of the preamble of claim 1.

According to the present invention there is provided a hydraulic tensioner for an endless loop, flexible, power transmission element, the tensioner comprising a stamped housing in the form of a shell that is mountable on an engine structure, the shell having an open reservoir defined by a rim of said shell, the reservoir being designed to be closed when the housing is mounted on the engine, the rim being designed to support at least partially the housing on the engine structure, a chamber inside said reservoir, said chamber being defined by a wall, a plunger reciprocal in said chamber between retracted and extended positions, the plunger projecting through an opening in the housing and biased towards the extended position by a biasing member, and a passage in said wall that provides communication between the chamber and the reservoir for hydraulic fluid to pass from the reservoir into the chamber.

The tensioner structure provides for a housing that is relatively inexpensive to manufacture and which lends itself well to mass production at rapid rates. The shell structure of the housing means that it serves as one large reservoir that receives the hydraulic chamber. This means that hydraulic fluid is available instantly at engine start-up.

In one preferred embodiment the chamber wall is formed separately and fixed to the shell. It is preferably fixed to the rim of the housing at least.

In an alternative embodiment the chamber wall is formed integrally with the shell by stamping.

The chamber is preferably substantially cylindrical.

The wall thickness of the shell is ideally in the range of 0.2mm to 2.0mm.

The shell may have at least one fixing aperture for receipt of a fixing member, the aperture being in communication with the reservoir. The aperture preferably has a sleeve that depends into the reservoir. The sleeve may have at least one retaining element to retain the fixing member during transportation or handling of the tensioner. The retaining element may be in the form of a finger.

The shell preferably has an upper wall in which the fixing aperture is formed.

The region around the fixing aperture preferably has a ridge formed by a coining operation. This arrangement permits sealing at the interface between the shell and the fixing member. The ridge is ideally annular.

The chamber may have a reduced diameter portion at one end adjacent to said passage, a non-return valve being located in said reduced diameter portion.

Specific embodiments of the present invention will now be described, by way of example only, with reference to the accompanying drawings in which:
Figure 1 is a perspective view of a first embodiment of a tensioner housing shell from above;
Figure 2 is a perspective view of the shell of figure 1 shown from below;
Figure 3 is an underneath plan view of the shell of figure 1;
Figure 4 is a schematic underneath plan view of the shell of figure 1 with a hydraulic chamber shown in dotted line;
Figure 5 is an end view of the shell shown in figure 4;
Figure 6 is a perspective view of a second embodiment of the housing shell from above;
Figure 7 is a perspective view of the shell of figure 6 from underneath;
Figure 8 is an underneath plan view of the shell of figure 6;
Figure 9 is a sectioned view along line A-A of figure 8;
Figure 10 is a sectioned view along line B-B of figure 8;
Figure 11 is a schematic representation of the tensioner of figures 1 to 5 or that of figures 6 to 10 shown with plunger and non-return valve;
Figure 12 is a perspective view of a third embodiment of the present invention;
Figure 13 is a schematic side view of the tensioner housing of figure 12 shown in place on the engine block;
Figure 14 is a perspective view of a fourth embodiment of the present invention;
Figure 15 is a perspective view of a fifth embodiment of the present invention;
Figure 16 is a schematic sectioned view of the tensioner of the present invention shown with a fixing bolt in place prior to mounting on an engine;
Figure 17 is the same view as that of figure 16 but with the bolt shown fully inserted so as to mount the tensioner housing on an engine;
Figures 18a to 18c illustrate schematically different arrangements for sealing the tensioner housing to a surface of an engine;
Figures 19a and 19b are schematic illustrations depicting different designs for a hydraulic chamber of the present invention;
Figure 19c is a part cut-away perspective view of the embodiment of figure 19b.
Figure 20a is an exploded perspective view from underneath of an alternative tensioner embodiment of the present invention; and
Figure 20b is an assembled view of figure 20a with the chamber press-fitted into the chamber housing.

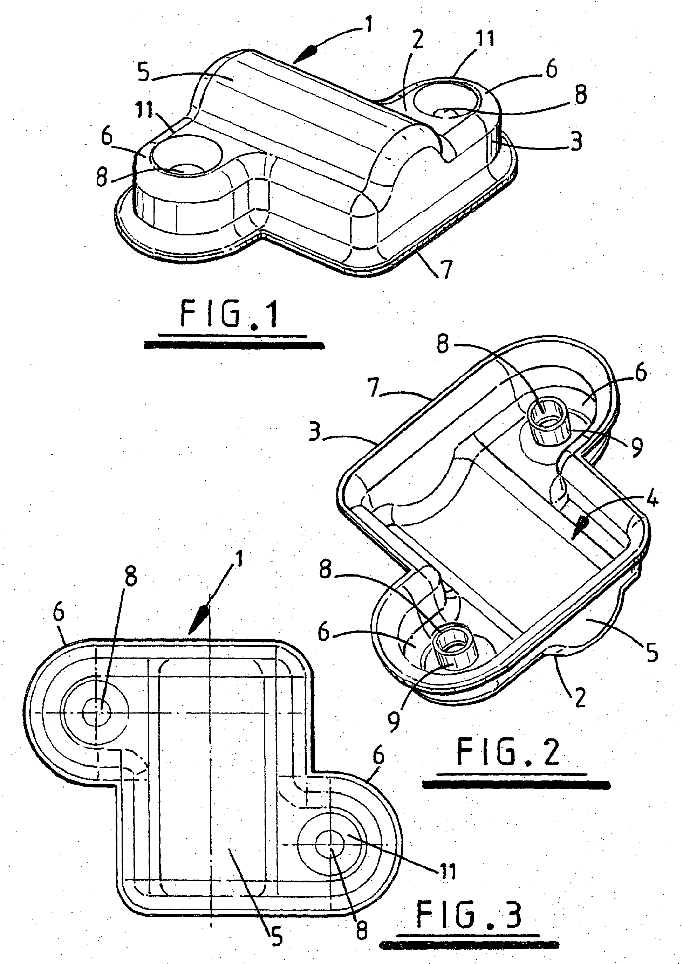

Referring now to figures 1 to 5 of the drawings, a housing body shell 1 of a first embodiment of the chain tensioner is shown. The shell 1 has been manufactured by a stamping it out of a sheet of metal to form a thin-walled structure having upper and side walls 2, 3 that define an open cavity 4.

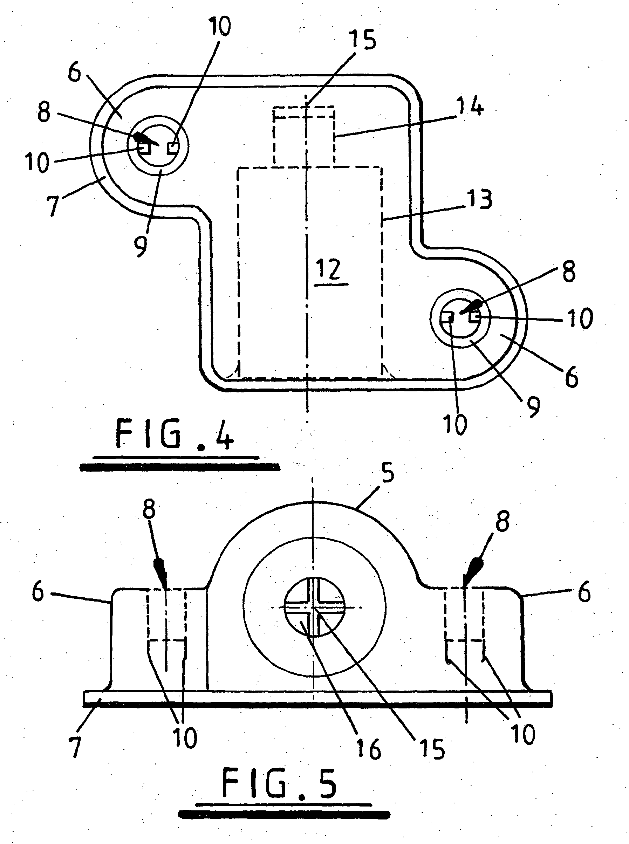

The housing has a central area 5 flanked by a fixing lug 6 on each side, the lugs 6 being spaced from one another along the length of the housing. The central area 5 is designed to receive a hydraulic chamber (not shown in figures 1 to 3 but shown in dotted line in figure 4) to accommodate this the upper wall 2 in that area has a complementary arcuate form. The depending side wall 3 flares outwardly to terminate in a rim 7, the underside of which is flat and smooth for mounting on the engine block (not shown). A gasket (not shown) may be provided, if necessary, to ensure effective sealing.

Each fixing lug 6 is formed with a central stamped out aperture 8 having a depending cylinder 9 that terminates in gripping fingers 10 (shown in figures 4 and 5 only). The region around each aperture 8 is stamped with a coining or embossing ring to form an annular ridge 11.

The hydraulic chamber 12 comprises a cylinder 13 that is fixed to the upper and/or side wall of the housing by means of welding, gluing, riveting, crimping or the like. It comprises a main portion that is open at one end for receipt of a cylindrical plunger and terminates at the other end in a reduced diameter cylinder 14 whose end is substantially closed except for a small oil inlet bore 15 that is produced by blanking after the housing has been stamped. The reduced diameter cylinder 14 is designed to receive a non-return valve as will be described later. The side wall of the housing is blanked after stamping to produce an aperture at 16 (see figure 5) where it meets the open end of the hydraulic chamber 12 so as to allow insertion and operation of the plunger.

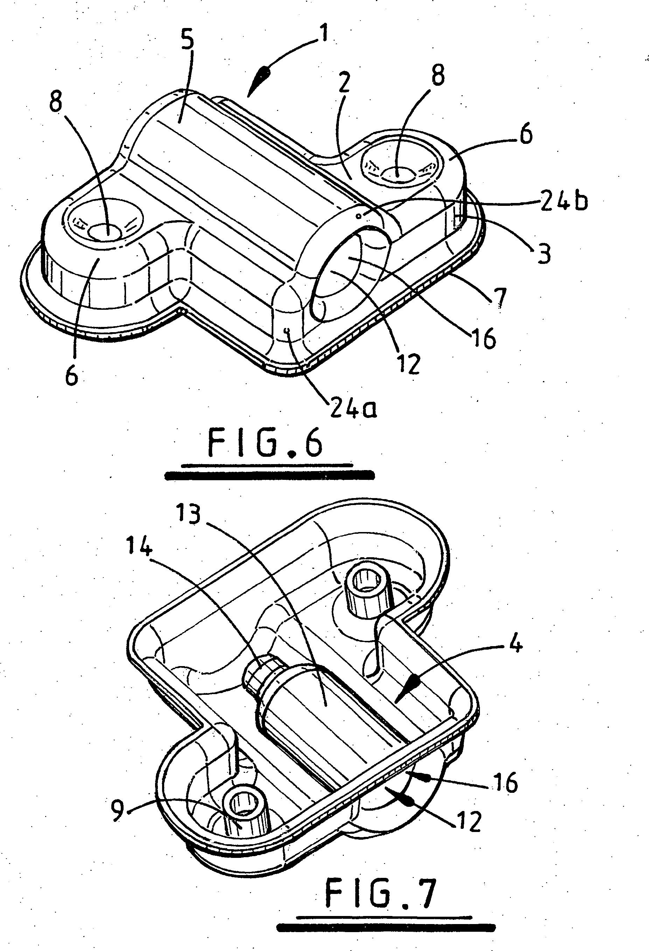

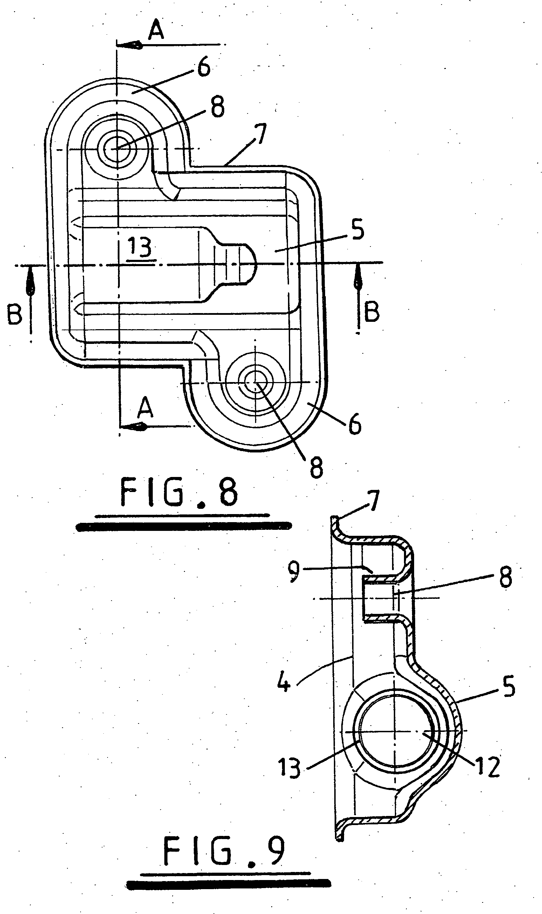

Turning now to the embodiment of figures 6 to 11, the same tensioner structure is produced by forming the hydraulic chamber integrally with the housing shell by means of a foldaway punch and die in the stamping process. The chamber is produced first by stamping before the housing is stamped to produce the side walls on all sides except that which meets with the hydraulic chamber. This wall is then folded into place. Parts corresponding to those of figures 1 to 5 are indicated by the same reference numerals.

The interior surface of the chamber wall may need machining to ensure that the cylindrical wall meets the engineering manufacturing tolerance.

Each of the tensioner of either of the above described tensioners is installed by mounting it on to an engine block such that the shell rim 7 seals against the engine and is retained there by fixing bolts (not shown) that pass through the apertures 8 in the lugs 6. Prior to installation, the fixing bolts are retained in the apertures by the fingers 10 so that they do not work loose during transportation and handling before assembly. The annular ridge 11 around each aperture 8 is compressed during fixing to enable a tight seal to be formed between the shell and the bolts so as to prevent oil leakage out of the housing at this interface. An O-ring seal or the like may be provided if necessary

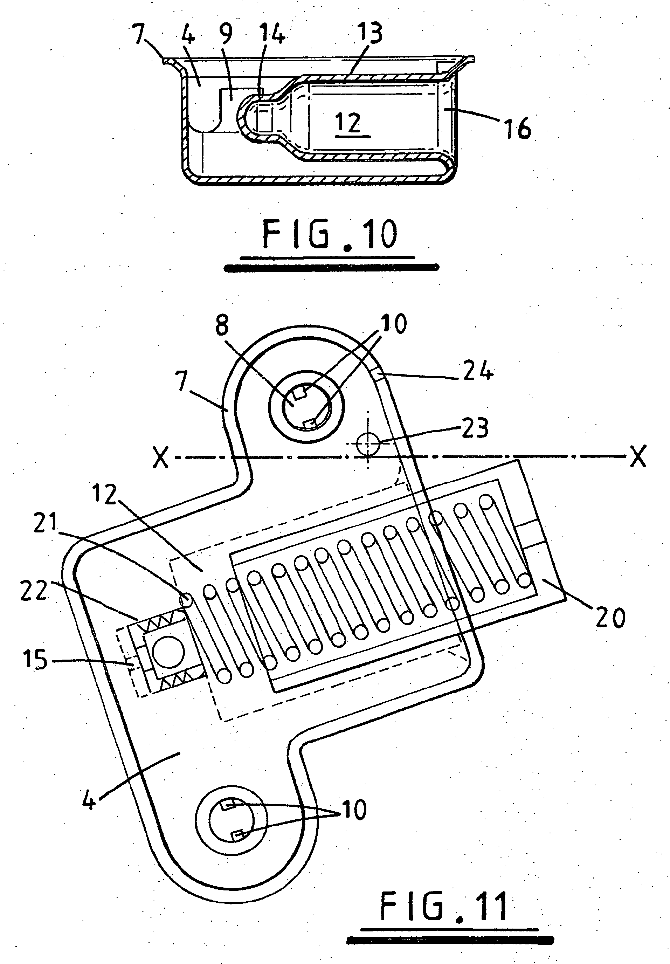

The tensioner is shown in figure 11 with a reciprocal cylindrical plunger 20 concentrically and slidably received in the hydraulic chamber 12. The plunger 20 is biased into an extended position in the conventional manner by a coaxial compression spring 21 disposed internally of the plunger. In addition a non-return ball valve 22 is disposed in the reduced diameter portion of the chamber 12 and controls the flow of hydraulic fluid into the chamber 12 through the small oil inlet bore 15. The valve 22 allows fluid to flow into the chamber 12 but prevents flow in the reverse direction. The cavity 4 defined by the housing is fed with oil from a feed on the engine block (its position is marked by reference numeral 23 in figure 11). The side wall has a small outlet nozzle 24 (figure 11) for applying a jet of oil on to the chain for lubrication. An alternative location for such a nozzle is shown in figure 6 by reference numeral 24a. This may also serve as an air purge. An additional aperture 24b is provided (figure 6) to allow insertion of a plunger release pin as is well known in the art. In such designs, the plunger is initially locked in a retracted state relative to the hydraulic housing. Once the tensioner has been correctly mounted and is ready for use the plunger is released for operation by insertion of pin to release a locking mechanism.

In use the cavity 4 defined by the housing 1 serves as an oil (or other hydraulic fluid) reservoir so that oil is available at engine start-up. The oil is fed from the engine block though the oil feed 23 into the housing and fills the reservoir 4. The oil enters the hydraulic chamber 12 through the inlet 15 in the reduced diameter portion 14 and via the non-return valve 22 where it serves to bias the plunger 20 out of the housing 1. Since the fluid is incompressible and the non-return valve 22 does not allow fluid to pass in the reverse direction through the inlet 15, the plunger 20 is prevented from retracting. The pressure of the fluid inside the chamber 12 and the biasing force of the compression spring 21 urge the plunger 20 to an extended position where it projects from the housing 1. The oil continues to flow into the chamber 12 and apply greater pressure until the reaction force of the chain on a tensioner shoe attached to the plunger 20 is equivalent to the combined force of the oil and the spring bias.

The tensioner is illustrated in figure 11 in the orientation it would ordinarily be fixed to the engine block and the minimum oil level for effective operation is shown by dotted line X-X. This level may vary for different housing and oil feed designs.

A conventional ratchet locking mechanism (which for clarity is not shown) is incorporated to prevent excessive retraction of the plunger even when the fluid pressure is low.

The stamped housing provides for a reservoir that effectively surrounds the hydraulic chamber. The capacity of this reservoir is far superior to those of moulded or machined tensioner housings of the prior art. Moreover, the design eliminates the need for machining operations to produce fixing holes, oil passages, oil reservoirs, planar surfaces etc.

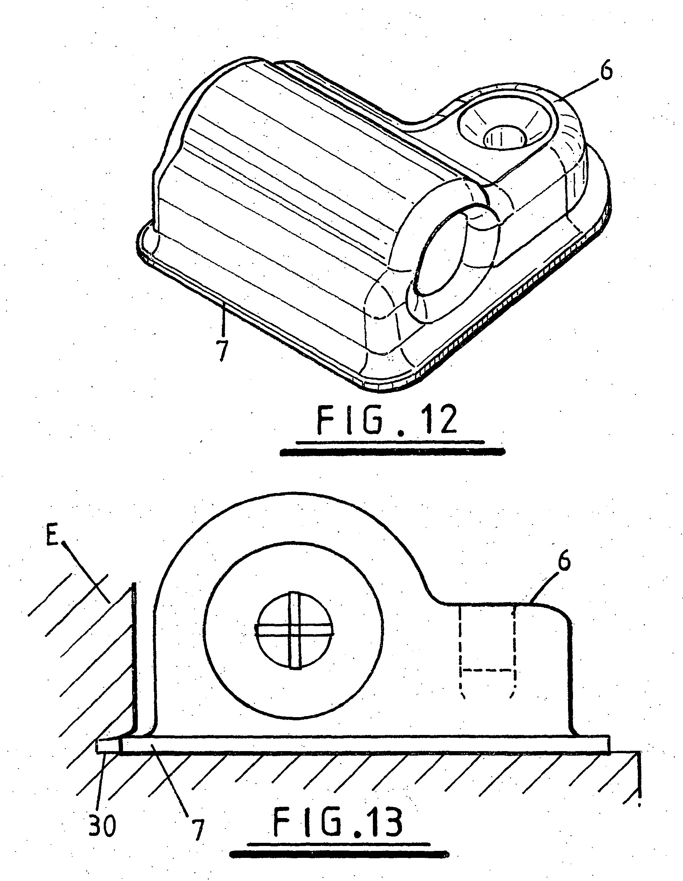

The alternative embodiment of the housing shell shown in figures 12 and 13 has only one fixing lug 6. This design is mounted on the engine block E (or cylinder head) by locating the flared rim 7 of the opposite side wall into a recess 30 in the block as indicated in figure 13.

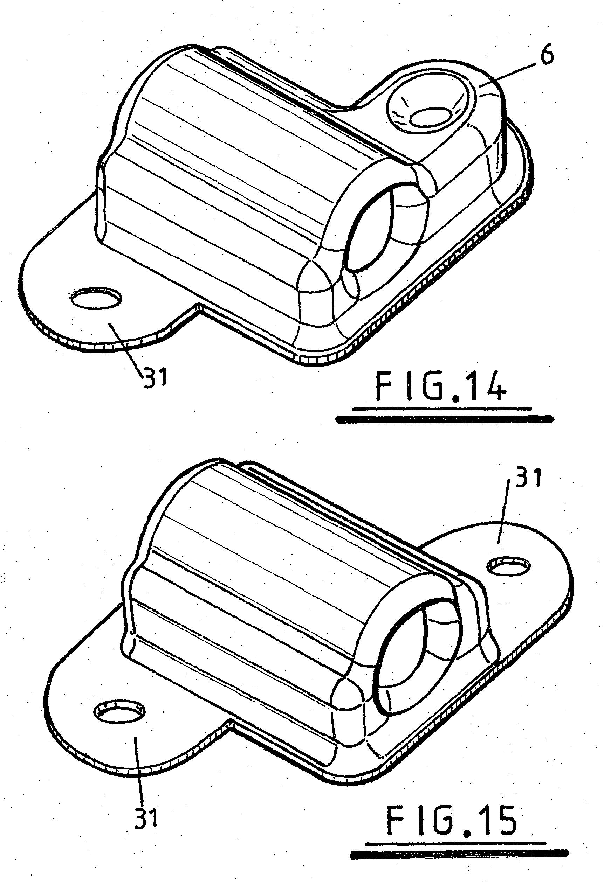

Alternative embodiments of the stamped housing shell may have fixing lugs in the form of flat plates as shown in figures 14 and 15. The embodiment of figure 14 has a one hollow lug 6 and one flat plate lug 31, whereas the housing shown in figure 15 has two flat plate lugs 31.

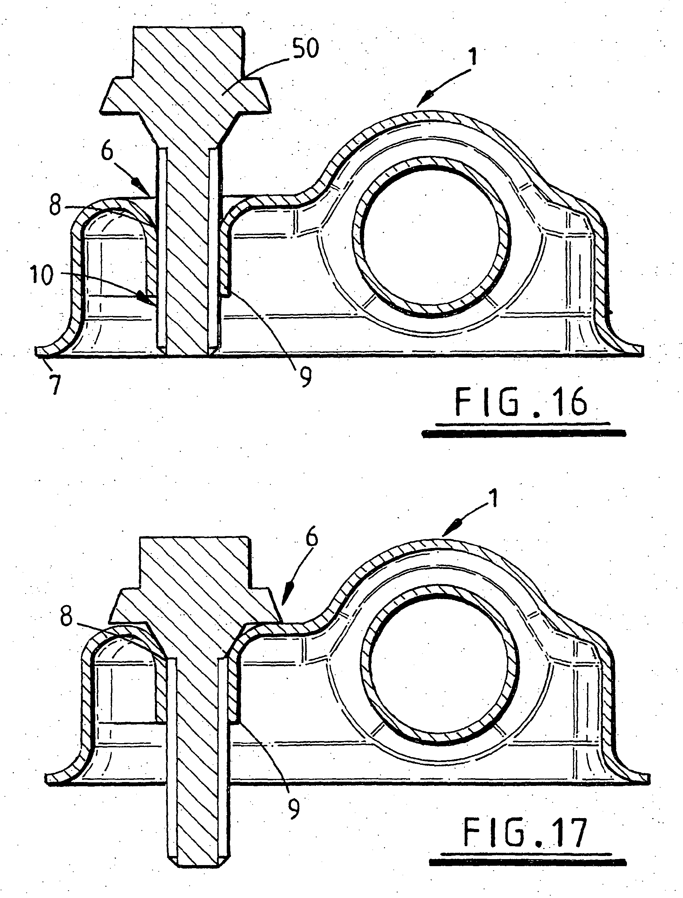

Figures 16 and 17 show a fixing bolt 50 in the aperture 8 of the tensioner housing. In figure 16 the bolt is captively retained in the aperture 8 by gripping fingers 10 so that it is not lost during transport or installation. In figure 17 the bolt is shown fully inserted so as to secure the tensioner housing 1 to the supporting surface (not shown)of an engine.

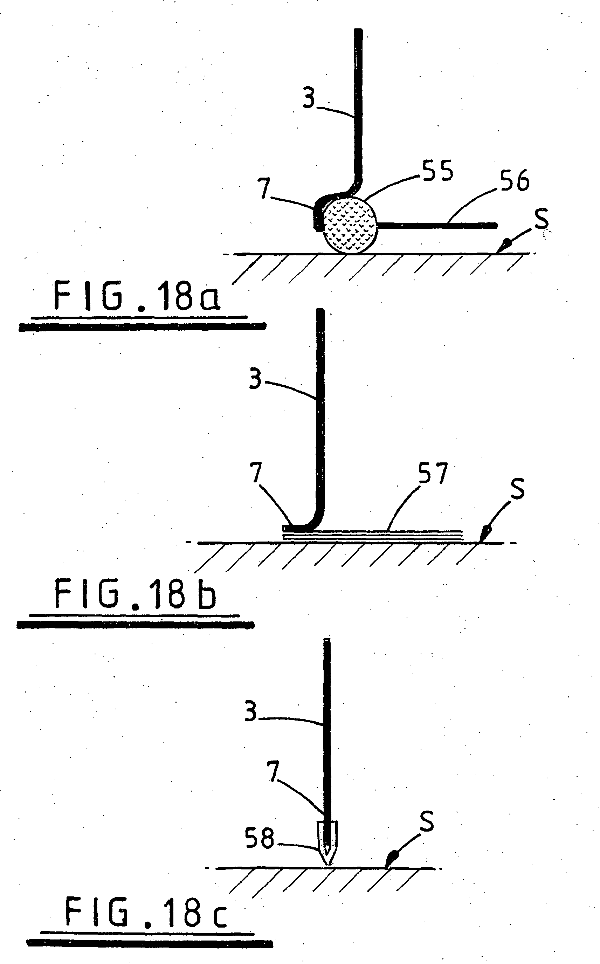

In figures 18a to 18c three alternative sealing arrangements for ensuring effective sealing of the side wall 3 of the housing 1 to the supporting surface S of an engine are illustrated. In figure 18a the rim 7 of the side wall 3 is extends outwardly and downwardly so as to define an internal surface that is approximately complementary to a peripheral sealing member 55 of a crushed gasket 56. The housing is sealed to the surface 8 via the crushed gasket. In the embodiment of figure 18b the sealing is achieved via mating surfaces of the out-turned rim 7 and a flat gasket 57. In the embodiment of figure 18c the rim 7 is not flared outwardly and is sealed against the supporting surface S via a U-shaped sealing member 58.

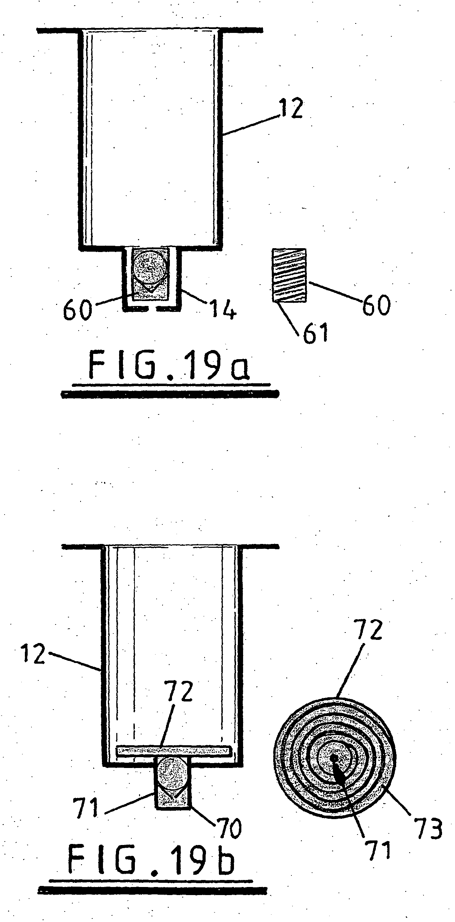

Two different embodiments of the hydraulic chamber are shown in figures 19a and 19b. In the embodiment of figure 19a the chamber 12 has a reduced diameter cylinder 14 at one end for receipt of a non-return valve 60. The valve is also shown to one side so as to illustrate the helical grooves 61 along its length that allow for passage of oil and/or escape of air. In the embodiment of figure 19b the chamber 12 does not have a reduced diameter portion and the valve 70 comprises a main body 71 with a flange 72 at one end. The main body 71 is disposed outside of the chamber 12 and the flange 72 is received inside. The surface of the flange 72 facing the chamber interior serves as the contact face for a spring or ratchet cylinder of the tensioner and may be provided with a spiral groove pattern 73 to allow air purging.

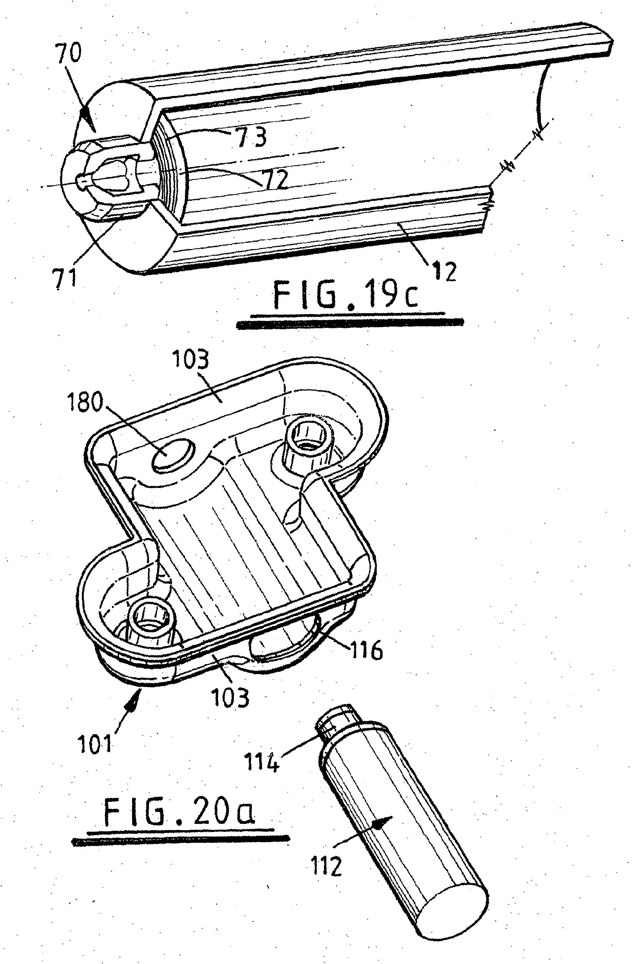

Figure 19c is a perspective view of the embodiment of figure 19b and has the chamber wall and valve body partially cut away to assist in understanding the arrangement.

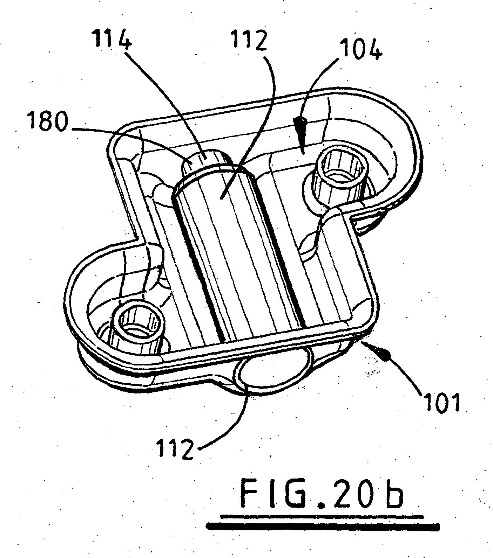

Figures 20a and 20b show an alternative embodiment of the design in which the chamber is made separately from the housing and is press-fitted into engagement therewith. Parts corresponding to those of figures 1 to 5 are indicated by the same reference numerals increased by 100 and are not further described except in so far as they differ from their counterparts of figures 1 to 5. The chamber 112 has a reduced diameter end 114 that is received in a press-fit engagement in an aperture 180 in the side wall 103 of the housing shell 101. The other open end of the chamber 112 is received in press-fit engagement with a larger aperture 116 in the side wall 103 of the housing shell. The wall of the reduced diameter portion 114 of the chamber has a small radial passage (hidden in the figures) that provides communication between the interior of the chamber 112 and the hydraulic fluid in the reservoir 104.

It is to be understood that numerous modifications to the above described design may be made without departing from the scope of the invention as defined in the appended claims. For example, the number of fixing apertures and lugs may be varied from the particular arrangement shown in the figures. Moreover, the non-return valve may take any appropriate form as an alternative to a ball valve. Finally, the air purge groove pattern may be defined on the wall of the chamber instead of the valve flange.

## Claims

1. A hydraulic tensioner for an endless loop, flexible, power transmission element, the tensioner comprising a housing in the form of a shell that is mountable on an engine structure, the shell (1) having an open reservoir (4) defined by a rim (7) of said shell (1), the reservoir (4) being designed to be closed when the housing is mounted on the engine, the rim (7) being designed to support at least partially the housing on the engine structure, a chamber (12) inside said reservoir (4), said chamber (12) being defined by a wall, a plunger (20) reciprocal in said chamber (12) between retracted and extended positions, the plunger (20) projecting through an opening in the housing and biased towards the extended position by a biasing member (21), and a passage in said wall that provides communication between the chamber (12) and the reservoir (4) for hydraulic fluid to pass from the reservoir (4) into the chamber (12), **characterized in that** the housing is stamped.

2. A tensioner according to claim 1, wherein the chamber (12) wall is formed separately and fixed to the shell (1).

3. A tensioner according to claim 2, wherein the chamber (12) wall is fixed to the rim of the housing at least.

4. A tensioner according to claim 1, wherein the chamber wall is formed integrally with the shell (1) by stamping or punching.

5. A tensioner according to any preceding claim, wherein the chamber (12) is substantially cylindrical.

6. A tensioner according to any preceding claim wherein the wall thickness of the shell (1) is in the range of 0.2mm to 2.0mm

7. A tensioner according to any preceding claim, wherein the shell (1) has at least one fixing aperture (8) for receipt of a fixing member, the aperture being in communication with the reservoir.

8. A tensioner according to claim 7, wherein the aperture (8) has a sleeve that depends into the reservoir.

9. A tensioner according to claim 8, wherein the sleeve has at least one retaining element (10) to retain the fixing member during transportation or handling of the tensioner.

10. A tensioner according to claim 9, wherein the retaining element (10) is in the form of a finger (10).

11. A tensioner according to any one of claims 7 to 10, wherein the shell has an upper wall in which the fixing aperture (8) is formed.

12. A tensioner according to any one of claims 7 to 11, wherein the region around the fixing aperture (8) has a ridge (11) formed by a coining operation

13. A tensioner according to claim 12, wherein the ridge (11) is annular.

14. A tensioner according to any preceding claim, wherein the chamber (12) has a reduced diameter portion at one end adjacent to said passage, a non-return valve (60) being located in said reduced diameter portion.

15. A tensioner according to claim 14, wherein the non-return valve (60) has a external groove pattern (73) to allow air purging.

16. A tensioner according to any one of claims 1 to 13, wherein there is provided a non-return valve (60) in said passage.

17. A tensioner according to claim 16, wherein the non-return valve (60) has a flange disposed inside the chamber and a main body that extends out of the chamber into said reservoir.

18. A tensioner according to claim 17, wherein the flange has an air purge groove.

19. A tensioner according to claim 17, wherein an interior wall of the chamber defines an air purge groove.

20. A tensioner according to any preceding claim wherein the is provided an aperture (24) in the housing that is configured to allow oil to egress from the reservoir in the form of a jet.

21. A tensioner according to any preceding claim, wherein there is provided an air purge aperture (24a) in the housing.

22. A tensioner according to any preceding claim, wherein said rim (7) is defined by an edge of the housing.

23. A tensioner according to any one of claims 1 to 20, wherein said rim (7) is defined by a substantially flat surface on an outwardly turned portion of a wall of the housing.

24. A tensioner according to any one of claims 1 to 20, wherein there is provided a sealing member (55, 57, 58) for sealing engagement with said rim (7).

25. A tensioner according to claim 24, wherein the rim (7) is shaped to be complementary to a contour of a sealing member (55, 57, 58).

26. A tensioner according to claim 2, wherein the chamber (12) is fixed to the shell (1) in a press-fit engagement.

## Patentansprüche

1. Hydraulische Spannvorrichtung für ein flexibles Endlosschleifen-Kraftübertragungssystem, wobei die Spannvorrichtung Folgendes umfasst: ein Gehäuse in der form einer Hülle, die an einer Motorstruktur angebracht werden kann, wobei die Hülle (1) einen offenen Behälter (4) hat, der durch einen Rand (7) der Hülle (1) definiert wird, wobei der Behälter (4) dafür ausgelegt ist, geschlossen zu sein, wenn das Gehäuse an dem Motor angebracht ist, wobei der Rand (7) dafür ausgelegt ist, wenigstens teilweise das Gehäuse an der Motorstruktur zu tragen, eine Kammer (12) innerhalb des Behälters (4), wobei die Kammer (12) durch eine Wand definiert wird, einen Druckkolben (20), der in der Kammer (12) zwischen einer eingezogenen und einer ausgefahrenen Position hin- und hergeht, wobei der Druckkolben (20) durch eine Öffnung in dem Gehäuse vorspringt und durch ein Vorspannelement (21) zu der ausgefahrenen Position hin vorgespannt wird, und einen Durchgang in der Wand, der eine Verbindung zwischen der Kammer (12) und dem Behälter (4) bereitstellt, damit ein Hydraulikfluid aus dem Behälter (4) in die Kammer (12) hindurchgeht, **dadurch gekennzeichnet, dass** das Gehäuse gestanzt ist.

2. Spannvorrichtung nach Anspruch 1, wobei die Wand der Kammer (12) gesondert geformt und an der Hülle (1) befestigt ist.

3. Spannvorrichtung nach Anspruch 2, wobei die Wand der Kammer (12) wenigstens am Rand des Gehäuses befestigt ist.

4. Spannvorrichtung nach Anspruch 1, wobei die Kammerwand durch Stanzen oder Ausstanzen integral mit der Hülle (1) geformt ist.

5. Spannvorrichtung nach einem der vorhergehenden Ansprüche, wobei die Kammer (12) im Wesentlichen zylindrisch ist.

6. Spannvorrichtung nach einem der vorhergehenden Ansprüche, wobei die Wanddicke der Hülle (1) im Bereich von 0,2 mm bis 2,0 mm liegt.

7. Spannvorrichtung nach einem der vorhergehenden Ansprüche, wobei die Hülle (1) wenigstens eine Befestigungsöffnung (8) zum Aufnehmen eines Befestigungselements hat, wobei die Öffnung in Verbindung mit dem Behälter steht.

8. Spannvorrichtung nach Anspruch 7, wobei die Öffnung (8) eine Buchse hat, die in den Behälter hängt.

9. Spannvorrichtung nach Anspruch 8, wobei die Buchse wenigstens ein Halteelement (10) hat, um das Befestigungselement während des Transportes oder des Handhabens der Spannvorrichtung festzuhalten.

10. Spannvorrichtung nach Anspruch 9, wobei das Halteelement (10) die Form eines Fingers (10) hat.

11. Spannvorrichtung nach einem der Ansprüche 7 bis 10, wobei die Hülle eine obere Wand hat, in der die Befestigungsöffnung (8) geformt ist.

12. Spannvorrichtung nach einem der Ansprüche 7 bis 11, wobei der Bereich um die Befestigungsöffnung (8) einen durch einen Prägevorgang geformten Steg (11) hat.

13. Spannvorrichtung nach Anspruch 12, wobei der Steg (11) ringförmig ist.

14. Spannvorrichtung nach einem der vorhergehenden Ansprüche, wobei die Kammer (12) einen Abschnitt mit verringertem Durchmesser an einem an den Durchgang angrenzenden Ende hat, wobei ein Rückschlagventil (60) in dem Abschnitt mit verringertem Durchmesser angeordnet ist.

15. Spannvorrichtung nach Anspruch 14, wobei das Rückschlagventil (60) ein äußeres Rillenmuster (73) hat, um eine Luftspülung zu ermöglichen.

16. Spannvorrichtung nach einem der Ansprüche 1 bis 13, wobei ein Rückschlagventil (60) in dem Durchgang bereitgestellt wird.

17. Spannvorrichtung nach Anspruch 16, wobei das Rückschlagventil (60) einen innerhalb der Kammer angeordneten Flansch und einen Hauptkörper, der sich aus der Kammer in den Behälter erstreckt, hat.

18. Spannvorrichtung nach Anspruch 17, wobei der Flansch eine Luftspülungsrille hat.

19. Spannvorrichtung nach Anspruch 17, wobei eine Innenwand der Kammer eine Luftspülungsrille definiert.

20. Spannvorrichtung nach einem der vorhergehenden Ansprüche, wobei in dem Gehäuse eine Öffnung (24) bereitgestellt wird, die dafür konfiguriert ist, zu ermöglichen, dass Öl in der Form eines Strahls aus dem Behälter austritt.

21. Spannvorrichtung nach einem der vorhergehenden Ansprüche, wobei in dem Gehäuse eine Luftspülungsöffnung (24a) bereitgestellt wird.

22. Spannvorrichtung nach einem der vorhergehenden Ansprüche, wobei der Rand (7) durch eine Kante des Gehäuses definiert wird.

23. Spannvorrichtung nach einem der Ansprüche 1 bis 20, wobei der Rand (7) durch eine im Wesentlichen flache Oberfläche an einem nach außen gewendeten Abschnitt einer Wand des Gehäuses definiert wird.

24. Spannvorrichtung nach einem der Ansprüche 1 bis 20, wobei ein Dichtungselement (55, 57, 58) für einen Dichtungseingriff mit dem Rand (7) bereitgestellt wird.

25. Spannvorrichtung nach Anspruch 24, wobei der Rand (7) dafür konfiguriert ist, komplementär zu einem Umriss eines Dichtungselements (55, 57, 58) zu sein.

26. Spannvorrichtung nach Anspruch 2, wobei die Kammer (12) in einem Presspassungseingriff an der Hülle (1) befestigt ist.

## Revendications

1. Tendeur hydraulique pour un élément de transmission d'énergie flexible, à boucle sans fin, le tendeur comprenant un boîtier sous forme d'une coque pouvant être monté sur une structure de moteur, la coque (1) comportant un réservoir ouvert (4) défini par un rebord (7) de ladite coque (1), le réservoir (4) étant conçu de sorte à être fermé lors du montage du boîtier sur le moteur, le rebord (7) étant conçu de sorte à supporter au moins partiellement le boîtier sur la structure de moteur, une chambre (12) à l'intérieur dudit réservoir (4), ladite chambre (12) étant définie par une paroi, un piston (20) effectuant un déplacement alternatif dans ladite chambre (12) entre des positions rétractée et étendue, le piston (20) débordant à travers une ouverture dans le boîtier et étant poussé vers la position étendue par un élément poussoir (21), et un passage dans ladite paroi établissant une communication entre la chambre (12) et le réservoir (4) pour permettre le passage du fluide hydraulique du réservoir (4) dans la chambre (12), **caractérisé en ce que** le boîtier est estampé.

2. Tendeur selon la revendication 1, dans lequel la paroi de la chambre (12) est formée séparément et fixée sur la coque (1).

3. Tendeur selon la revendication 2, dans lequel la paroi de la chambre (12) est fixée au moins sur le rebord du boîtier.

4. Tendeur selon la revendication 1, dans lequel la paroi de la chambre est formée d'une seule pièce avec la coque (1) par estampage ou poinçonnage.

5. Tendeur selon l'une quelconque des revendications précédentes, dans lequel la chambre (12) est pratiquement cylindrique.

6. Tendeur selon l'une quelconque des revendications précédentes, dans lequel l'épaisseur de paroi de la coque (1) est comprise dans l'intervalle allant de 0,2 mm à 2,0 mm.

7. Tendeur selon l'une quelconque des revendications précédentes, dans lequel la coque (1) comporte au moins une ouverture de fixation (8) pour recevoir un élément de fixation, l'ouverture étant en communication avec le réservoir.

8. Tendeur selon la revendication 7, dans lequel l'ouverture (8) comporte un manchon s'étendant dans le réservoir.

9. Tendeur selon la revendication 8, dans lequel le manchon comporte au moins un élément de retenue (10) pour retenir l'élément de fixation lors du transport ou de la manipulation du tendeur.

10. Tendeur selon la revendication 9, dans lequel l'élément de retenue (10) a la forme d'un doigt (10).

11. Tendeur selon l'une quelconque des revendications 7 à 10, dans lequel la coque comporte une paroi supérieure dans laquelle est formée l'ouverture de fixation (8),

12. Tendeur selon l'une quelconque des revendications 7 à 11, dans lequel la région entourant l'ouverture de fixation (8) comporte une nervure (11) formée par une opération de matriçage.

13. Tendeur selon la revendication 12, dans lequel la nervure (11) est annulaire.

14. Tendeur selon l'une quelconque des revendications précédentes, dans lequel la chambre (12) comporte une partie à diamètre réduit au niveau d'une extrémité adjacente audit passage, une soupape de retenue (60) étant agencée dans ladite partie à diamètre réduit.

15. Tendeur selon la revendication 14, dans lequel la soupape de retenue (60) comporte un motif de rainures externe (73) pour permettre la purge de l'air.

16. Tendeur selon l'une quelconque des revendications 1 à 13, dans lequel une soupape de retenue (60) est agencée dans ledit passage.

17. Tendeur selon la revendication 16, dans lequel la soupape de retenue (60) comporte une bride agencée à l'intérieur de la chambre et un corps principal s'étendant hors de la chambre dans ledit réservoir.

18. Tendeur selon la revendication 17, dans lequel la bride comporte une rainure de purge de l'air.

19. Tendeur selon la revendication 17, dans lequel une paroi interne de la chambre définit une rainure de purge de l'air.

20. Tendeur selon l'une quelconque des revendications précédentes, dans lequel une ouverture (24) est formée dans le boîtier, configurée de sorte à permettre la sortie de l'huile du réservoir sous forme d'un jet.

21. Tendeur selon l'une quelconque des revendications précédentes, dans lequel une ouverture de purge de l'air (24a) est formée dans le boîtier,

22. Tendeur selon l'une quelconque des revendications précédentes, dans lequel ledit rebord (7) est défini par un bord du boîtier.

23. Tendeur selon l'une quelconque des revendications 1 à 20, dans lequel ledit rebord (7) est défini par une surface pratiquement plate sur une partie tournée vers l'extérieur d'une paroi du boîtier.

24. Tendeur selon l'une quelconque des revendications 1 à 20, comportant un élément d'étanchéité (55, 57, 58) destiné à s'engager de manière étanche dans ledit rebord (7).

25. Tendeur selon la revendication 24, dans lequel le rebord (7) est formé de sorte à être complémentaire d'un contour d'un élément d'étanchéité (55, 57, 58).

26. Tendeur selon la revendication 2, dans lequel la chambre (12) est fixée sur la coque (1) par engagement par pression.
